**Europäisches Patentamt**

**European Patent Office**

**Office européen des brevets**

(19)

(11) Veröffentlichungsnummer: **0 055 502**
A1

(12) **EUROPÄISCHE PATENTANMELDUNG**

(21) Anmeldenummer: 81201389.4

(22) Anmeldetag: 21.12.81

(51) Int. Cl.³: **C 08 F 222/06**
C 08 F 210/00, C 08 F 2/06
//(C08F222/06, 210/00),
(C08F210/00, 222/06)

(30) Priorität: 30.12.80 DE 3049432

(43) Veröffentlichungstag der Anmeldung:
07.07.82 Patentblatt 82/27

(84) Benannte Vertragsstaaten:
BE CH DE FR GB IT LI LU NL SE

(71) Anmelder: CHEMISCHE WERKE HÜLS AG
Postfach 1320
D-4370 Marl 1(DE)

(72) Erfinder: Gude, Fritz, Dr.
Wilhelmstrasse 4
D-4690 Herne 2(DE)

(72) Erfinder: Haferkorn, Herbert
Horster Strasse 528
D-4250 Bottrop(DE)

(74) Vertreter: Steil, Hanna, Dipl.-Chem.
RSP PATENTE - PB 40 Herzogstrasse 28 Postfach 2840
D-4690 Herne 2(DE)

(54) Verfahren zur Herstellung von radikalisch initiierten Copolymerisaten aus Maleinsäureanhydrid und Olefinen.

(57) Verfahren zur Herstellung von radiakalisch initiierten Copolymerisaten aus Maleinsäureanhydrid und Olefinen in Gegenwart eines Lösungsmittels für die Monomeren, wobei als Lösungsmittel Diisopropylketon und/oder Diisobutylketon eingesetzt wird.

CHEMISCHE WERKE HÜLS AG        - 1 -        Q.Z. 3703
- RSP PATENTE -

Verfahren zur Herstellung von radikalisch
initiierten Copolymerisaten aus Maleinsäureanhydrid und Olefinen

Will man die Copolymeren aus Maleinsäureanhydrid und Olefinen für Folgereaktionen in fester Form gewinnen, arbeitet
man zweckmäßig in Lösungsmitteln für die Monomeren, aus
denen das polymere Anhydrid schwerlöslich und gut isolierbar ausfällt. Über diese Arbeitsweise finden sich in der
Literatur viele Publikationen, in denen Aromaten als besonders geeignet empfohlen werden.

So wurde schon vor längerer Zeit beschrieben, z.B. Maleinsäureanhydrid mit Styrol in Benzol zu polymerisieren (Braun,
Cherdron, Kern, Praktikum der Makromolekularen Chemie,
S. 175, Dr. A.Hüthig Verlag GmbH [1966]).

Weiter geht aus der DE-OS 2 727 510 hervor, daß man Copolymerisate aus Maleinsäureanhydrid und Dicyclopentadien in
Toluol herstellen kann.

In der DE-OS 2 943 980 wird bei der Copolymerisation von
Maleinsäureanhydrid, Dicyclopentadien und Cyclooctadien
und in der DE-OS 2 939 293 bei der Copolymerisation von Maleinsäureanhydrid, Dicyclopentadien, Vinylcyclohexen Cumol
als Lösungsmittel verwendet.

Die DE-OS 2 941 589 behandelt die besonderen Vorteile von
Aromaten mit tert.-Butyl-Gruppen als Lösungsmittel bei den
radikalisch initiierten Copolymerisationen von Maleinsäureanhydrid mit Olefinen.

Diesem positiven Verhalten der Aromaten steht nun u.a. die
hartnäckige Quellung der Maleinsäureanhydrid-Olefin-Copolymerisate gerade in diesen Lösungsmitteln als gravierender
Nachteil gegenüber. So hält z.B. das Copolymerisat aus Maleinsäureanhydrid und Dicyclopentadien das Cumol dermaßen
stark zurück, daß man nach Abtrennen des Lösungsmittels
nach der Polymerisationsreaktion noch 25-40 % Restfeuchte vorfindet. Wie sich herausstellte, ist zu ihrer Entfernung aus z.B. dem Copolymerisat aus Maleinsäureanhydrid und Dicyclopentadien eine 35-45-stündige Behandlung des Polymeren bei annähernd 140 °C und 40 mbar, gegebenenfalls unter Durchleiten von Wasserdampf bzw. Stickstoff erforderlich. Selbst danach sind noch 1-2 % Aromaten, wie z.B. Cumol, im Copolymerisat als Restfeuchte nachzuweisen. Da eine Schädigung des Polymerisates bei der langen und hohen Temperaturbelastung auftritt, mußte die Trockentemperatur auf max. 120 °C zurückgenommen werden. Dadurch erhöht sich die Trockenzeit noch erheblich.

Bei Gesamtmonomer-Konzentration oberhalb 23 Gew.% treten bei den Copolymerisationen in Aromaten als Lösungsmittel oft bereits Vernetzungen ein, die die Verträglichkeit mit anderen Systemen unmöglich machen.

In der US-PS 3 188 303 wird u.a. auch die Verwendung von Heptan als Lösungsmittel zur Durchführung der Copolymerisation von Maleinsäureanhydrid mit Dicyclopentadien beschrieben, woraus das Polymere als dunkles schmieriges Harz ausfällt.

Es stellte sich nun überraschend heraus, daß man die oben angeführten Nachteile der aromatischen und aliphatischen Lösungsmittel umgehen kann, wenn man an ihre Stelle Diisopropylketon und/oder Diisobutylketon verwendet. Aus beiden Lösungsmitteln fallen die Copolymerisate erheblich heller und feinpulvriger aus als aus den Aromaten, wobei sich die Lösungsmittelretention allerdings als etwa gleich groß erwies. Jedoch gelingt die Trocknung in erheblich geringerer Zeit und/oder niedrigerer Temperatur.

Im Gegensatz zu den erfindungsgemäß eingesetzten Ketonen eignen sich alle anderen Ketone im Bereich von $C_3$- bis $C_9$-Kohlenstoffatomen nicht für die Arbeitsweise dieser Erfindung. Aus ihnen fallen die Copolymerisate entweder schmierig aus oder besitzen eine zu gute Löslichkeit.

Während, wie bereits oben erwähnt, in Aromaten bei Gesamtmonomerkonzentrationen von mehr als 23 Gew.% oft vernetzte, in anderen Systemen nicht mehr lösliche Anteile auftreten, können in den erfindungsgemäß eingesetzten Ketonen im Prinzip Monomerkonzentrationen von über 40 Gew.% verwendet werden - bei voller Löslichkeit bzw. Verträglichkeit der entstandenen Copolymerisate in anderen Systemen, z.B. in organischen und wässrig-alkalischen Lösungsmitteln und Epoxidharzen.

Gegenstand der Erfindung ist daher ein Verfahren zur Herstellung von radikalisch initiierten Copolymerisaten aus Maleinsäureanhydrid und Olefinen in Gegenwart eines Lösungsmittels für die Monomeren, das dadurch gekennzeichnet ist, daß als Lösungsmittel Diisopropylketon und/oder Diisobutylketon eingesetzt wird.

Praktisch kann man so verfahren, daß man z.B. Maleinsäureanhydrid mit Dicyclopentadien im Molverhältnis 1:1,3 und einer Gesamtmonomerkonzentration von 40 Gew.% in Diisopropylketon unter Zusatz von Dibenzoylperoxid als Initiator bei 95 $^{\circ}$C polymerisiert. Dabei fällt das Copolymerisat mit einer Ausbeute von 73 Gew.% als farbloses feines Pulver aus. Das abgetrennte Festprodukt besitzt noch eine Restfeuchte von ~33 %, die durch 5-stündiges Trocknen bei 90 $^{\circ}$C und 30 mbar leicht entfernt werden kann. In diesem Zustand ist das Copolymerisat unmittelbar verwendungsfähig.

Das Filtrat enthält die nicht umgesetzten Monomeren und kann ohne jede Reinigung nach Ergänzung des verbrauchten Maleinsäureanhydrids und Dicyclopentadiens unmittelbar bis zu etwa 7 mal erneut für weitere Copolymerisattionen eingesetzt werden.

Zur Herstellung der Copolymerisate lassen sich als Reaktionspartner für das Maleinsäureanhydrid alle geeigneten Olefine, wie z.B. Dicyclopentadien, Dicyclopenten, Vinylcyclohexen, Cyclooctadien, Cyclododecatrien, Styrol, Ethylen,
Propylen usw. wie auch Gemische verwenden.

Die Copolymerisate gemäß dieser Erfindung kann man z.B. zur
Herstellung von Halbestern - durch einfaches Lösen in Alkoholen - oder als Imide - z.B. nach Reaktion mit Dimethylformamid - als Zwischenverbindungen oder auch als Epoxidhärter unmittelbar verwenden. Es ist auch, im Gegensatz
zu den in Aromaten hergestellten feuchten Copolymeren,
möglich, Copolymerisate mit einer Restfeuchte von sogar über
70 % Keton unmittelbar in wässrigen Alkalien zu lösen. Nach
Abtrennen des sich als organische Schicht abscheidenden,
mit Wasser nicht mischbaren Ketons erhält man die wässrige
Lösung des Copolymerisat-Alkalisalzes, das in dieser Form
unmittelbar, z.B. in Papierleimungsmitteln, verwendet werden kann.


Beispiele:

1) Copolymerisat aus Maleinsäureanhydrid und Dicyclopentadien

   a) In Diisopropylketon

      38,3 g Maleinsäureanhydrid, 68,9 g Dicyclopentadien
      und 110 g Diisopropylketon heizt man auf etwa 93 $^\circ$C
      auf, deckt die entstandene Lösung mit Stickstoff
      ab und tropft eine Lösung von 5,4 g Dibenzoylperoxid
      in 80 g Diisopropylketon so ein, daß die Temperatur
      von 95 $^\circ$C nicht überschritten wird. Dazu benötigt
      man etwa 3 Stunden. Anschließend erfolgt eine Nachreaktion von etwa 2 Stunden bei gleicher Temperatur,
      wonach kein Peroxid mehr nachweisbar ist. Nun läßt
      man auf Zimmertemperatur abkühlen und nutscht nach einigem Stehen das fein ausgefallene, farblose Pulver
      ab. Nach 5-stündiger Trocknung bei 95 $^\circ$C und 30 mbar

gewinnt man das Copolymerisat mit einer Ausbeute von 73,2 % der Theorie, bezogen auf eingesetztes Maleinsäureanhydrid.

27 g. filterfeuchtes Copolymerisat (entspricht etwa 18 g Trockensubstanz) wird durch Rühren mit $130 cm^3$ 6%igem wässrigem Ammoniak bei 70 °C innerhalb weniger Minuten gelöst. Danach scheidet sich das vorher als Restfeuchte in dem Copolymerisat verbliebene Diisopropylketon rasch als organische Schicht über der wässrigen Lösung ab.

b) In Diisobutylketon Bei der Wiederholung des Versuchs 1a) in Diisobutylketon als Lösungsmittel wird das Copolymerisat in einer Ausbeute von 77,5 % der Theorie, bezogen auf eingesetztes Maleinsäureanhydrid,gewonnen.

c) Vergleichsversuch in Cumol Eine nach DE-OS 2 727 510 in Cumol aus 1 Mol Maleinsäureanhydrid und 1 Mol Dicyclopentadien hergestelltes Copolymerisat besitzt nach Abtrennen des Lösungsmittels noch eine Restfeuchte von 32 % Cumol. 30 g dieses filterfeuchten Copolymerisates kann durch Rühren mit $125 cm^3$ 6%igem Ammoniakwasser bei 70 °C in eine Suspension übergeführt werden, aus der sich nach tagelangem Stehen bei Zimmertemperatur nur ganz geringe Mengen Cumol abscheiden. Eine Lösung der festen, gequollenen Substanz ist nicht festzustellen.

2) Copolymerisat aus Maleinsäureanhydrid, Vinylcyclohexen, Cyclooctadien und Cyclododecatrien

Unter sonst gleichen Bedingungen wie unter 1a) beschrieben wird 38,3 g Maleinsäureanhydrid mit einem Gemisch von 22,5 g 1-Vinylcyclohexen-(3), 31,3 g cis, cis-Cyclooctadien-(1,5) und 2,6 g cis, trans, trans-Cyclododecatrien-(1,5,9) in 110 g Diisopropylketon unter Zutropfen von 5,4 g Dibenzoylperoxid in 100 g Diisobutylketon polymerisiert. Durch 4-stündiges Trocknen bei 95 °C und 30 mbar läßt sich das filterfeuchte Polymerisat von seiner Restfeuchte (29,5 %) befreien. Die Ausbeute an Copolymerisat ist 82,7 % der Theorie, bezogen auf Maleinsäureanhydrid.

3) Copolymerisat aus Maleinsäureanhydrid und Styrol Durch Polymerisieren von 30,9 g entstabilisiertem Styrol und 29,1 g Maleinsäureanhydrid in Diisopropylketon (Gesamtmonomerkonzentration 20 Gew.%), wie unter 1a) beschrieben, erhält man das filterfeuchte Produkt mit einer Restfeuchte von 35,4 %. Das Copolymerisat kann durch 5-stündiges Trocknen bei 95 °C/30 mbar getrocknet werden. Die Ausbeute beträgt 96,4 % der Theorie, bezogen auf Maleinsäureanhydrid.

Patentanspruch:

Verfahren zur Herstellung von radikalisch initiierten
Copolymerisaten aus Maleinsäureanhydrid und Olefinen
in Gegenwart eines Lösungsmittels für die Monomeren,
dadurch gekennzeichnet,
daß als Lösungsmittel Diisopropylketon und/oder Diisobutylketon eingesetzt wird.

## 0055502

Europäisches Patentamt

EUROPÄISCHER RECHERCHENBERICHT

Nummer der Anmeldung

EP 81 20 1389

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 423 355 (J. A. VERDOL)<br>* Patentanspruch 1 * | 1 |
| | -- | |
| X | US - A - 3 560 455 (S.M. HALEN)<br>* Patentanspruch 1; Spalte 5, Zeilen 1-3 * | 1 |
| | ---- | |

**KLASSIFIKATION DER ANMELDUNG (Int Cl.³)**

C 08 F 222/06
        210/00
            2/06//
(C 08 F 222/06
        210/00)
(C 08 F 210/00
        222/06)

**RECHERCHIERTE SACHGEBIETE (Int. Cl.³)**

C 08 F    22/00-
        22/06
        222/00
        222/06

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-02-1982 | CAUWENBERG |

EPA form 1503.1  06.78